# EUROPÄISCHE PATENTSCHRIFT

(11) **EP 1 390 763 B1**
(45) Veröffentlichungstag und Bekanntmachung des Hinweises auf die Patenterteilung: **13.02.2008**
(21) Anmeldenummer: 02738122.7
(22) Anmeldetag: 29.05.2002
(51) Int. Cl.: G01P 3/48, H02P 7/00

(54) **VERFAHREN ZUM KORRIGIEREN EINER DREHSTELLUNGSBESTIMMUNG EINER ANTRIEBSWELLE EINES KOMMUTIERTEN GLEICHSTROMMOTORS**
METHOD FOR CORRECTING THE DETERMINATION OF THE ROTATIONAL POSITION OF A COMMUTATED D.C. MOTOR DRIVE SHAFT
PROCEDE POUR CORRIGER UNE DETERMINATION DE POSITION DE ROTATION D'UN ARBRE D'ENTRAINEMENT D'UN MOTEUR A COURANT CONTINU COMMUTE

(30) Priorität: 30.05.2001 DE 10126167
(43) Veröffentlichungstag der Anmeldung: 25.02.2004
(73) Patentinhaber: Leopold Kostal GmbH & Co. KG, 58507 Lüdenscheid (DE)
(72) Erfinder: GERLACH, Tobias, 58119 Hagen (DE)
(86) Internationale Anmeldenummer: PCT/EP2002/005879
(87) Internationale Veröffentlichungsnummer: WO 2002/097449

(56) Entgegenhaltungen:
- EP-A- 1 043 590
- THONNISSEN J ET AL: "DREHZAHLMESSUNG MIT HILFE DER DEPSTRUMANALYSE" BOSCH TECHNISCHE BERICHTE, ROBERT BOSCH, STUTTGART, DE, Nr. 56, 1. Dezember 1994 (1994-12-01), Seiten 27-29, XP000500604 ISSN: 0006-789X

## Beschreibung

Die Erfindung betrifft ein Verfahren zum Korrigieren einer Drehstellungsbestimmung einer Antriebswelle eines kommutierten Gleichstrommotors durch Auswerten der im Ankerstromsignal enthaltenen Stromrippel bei Auftreten von Fehl- oder Doppelrippeln.

Das Ankerstromsignal eines kommutierenden Gleichstrommotors umfaßt einen Gleichanteil sowie einen den Gleichanteil überlagernden Wechselanteil. Der Wechselanteil entsteht bei einem Betrieb des Gleichstrommotors infolge des Zusammenwirkens von Magnet (Feld), Ankerwicklung und Kommutator des Gleichstrommotors. Dies äußert sich in einer kurzzeitigen Änderung der induzierten Spannung, woraus sich die Welligkeit des Ankerstromsignals ergibt. Die in dem Ankerstromsignal enthaltenen Stromspitzen - im folgenden Stromrippel genannt - treten bei einer Umdrehung des Ankers in einer der Anzahl der Kollektorlamellen entsprechenden Häufigkeit auf. Weist beispielsweise der Anker zehn Kollektorlamellen auf, sind im Ankerstromsignal entsprechend zehn Stromrippel zu erkennen. Eine Zählung der Stromrippel kann somit Aufschluß über die aktuelle Drehstellung des Ankers des Gleichstrommotors und somit bezüglich des von ihm angetriebenen Elements innerhalb seiner vorbestimmten Bewegungsstrecke geben. Zu diesem Zweck wird das analoge Ankerstromsignal digitalisiert, um eine entsprechende Zählung vornehmen zu können.

Um eine möglichst fehlerfreie Stromrippeldetektion durchführen zu können, wird das analoge Ankerstromsignal vor und ggf. auch nach seiner Digitalisierung zum Unterdrücken von Störeinflüssen entsprechend aufbereitet. Zur Aufbereitung des Ankerstromsignales werden Filterungen durchgeführt, die als Tiefpaßfilterung und/oder als Frequenzfilterungen ausgestaltet sind. Ein derartiges Signalaufbereitungsverfahren ist beispielsweise beschrieben in DE 195 11 307 C1. Sinn und Zweck derartiger Signalaufbereitungsverfahren ist es, ein präzises Ankerstromsignal, möglichst befreit von Störeinflüssen, bereitzustellen, damit dieses aufbereitete Ankerstromsignal anschließend im Hinblick auf die darin enthaltenen Stromrippel ausgewertet werden kann. Zur Positionsbestimmung werden die Rippel gezählt, da das Zählergebnis unmittelbar Aufschluß über die aktuelle Drehstellung der Antriebswelle bzw. des Ankers des Gleichstrommotors gibt. Zum Zählen der in dem Ankerstromsignal enthaltenen Stromrippel werden üblicherweise Minima- oder Maxima-Bestimmungsalgorithmen oder solche zur Bestimmung der Nulldurchgänge eingesetzt.

Mit den vorbekannten Signalaufbereitungs- und Korrekturverfahren lassen sich im Ankerstromsignal enthaltene Störeinflüsse jedoch nur dann hinreichend beseitigen oder minimieren, wenn die im Ankerstromsignal enthaltenen Stromrippel prägnant im Ankerstromsignal vorhanden sind. Aus diesem Grunde werden zur sensorlosen Positionsbestimmung mittels der im Ankerstromsignal enthaltenen Stromrippel nur solche Gleichstrommotoren eingesetzt, die hochwertige Kollektoren aufweisen und entsprechend sauber hergestellt bzw. verarbeitet worden sind. Daher kann eine solche sensorlose Positionsbestimmung mit kostengünstigen Gleichstrommotoren, die einen verzerrten Wechselanteil im Ankerstromsignal aufweisen, nicht vorgenommen werden.

Es kommt jedoch vor, daß im Ankerstromsignal Fehl- und/oder Doppelrippel auftreten, durch die grundsätzlich das Stromrippelzählergebnis verfälscht wird. Zur entsprechenden Korrektur des Stromrippelzählergebnisses bei Auftreten von Fehl- und/oder Doppelrippel ist dem Signalaufbereitungsverfahren und dem Auswerteverfahren üblicherweise nachgeschaltet ein Korrekturverfahren, mit dem zunächst das Auftreten von Fehl- und/oder Doppelrippeln erkannt werden soll, um anschließend die gewünschte Korrektur des Stromrippelzählergebnisses vornehmen zu können. Der Einsatz derartiger Verfahren ist notwendig, da diese Fehler durch den Kommutator oder andere überlagernde Störeinflüsse, z. B. die Bordnetzwelligkeit bedingt sind, und somit nicht ohne weiteres durch eine Aufbereitung des Ankerstromsignales eliminiert werden können. Eine solche Korrekturmaßnahme ist beispielsweise aus DE 197 29 238 C1 bekannt. Bei diesem Verfahren wird im Zeitpunkt einer Stromrippeldetektion anhand der aktuellen, aus Motorstrom- und Motorkenndaten ermittelten Drehzahl der Zeitpunkt der nächsten erwarteten Stromrippeldetektion berechnet. Dieser Zeitpunkt ist Teil eines bezüglich seiner Größe fest vorgegebenen Toleranzbereiches. Bei dem aus diesem Dokument bekannten Verfahren wird somit der berechnete Zeitpunkt des wahrscheinlich nächsten Kommutierungspunktes (Stromrippel) um die Größe des vorgegebenen Toleranzwertes erweitert. Auf diese Weise werden im oder vor dem berechneten Zeitpunkt nicht aufgetretene Stromrippel nur dann als Fehlrippel erkannt, wenn auch innerhalb des Toleranzbereiches ein Stromrippel nicht detektiert worden ist. Diese Verfahren sind jedoch rechenintensiv.

Ausgehend von diesem diskutierten Stand der Technik liegt der Erfindung daher die Aufgabe zugrunde, ein eingangs genanntes, gattungsgemäßes Verfahren bereitzustellen, mit dem eine sichere Detektion von Fehl- und Doppelrippeln mit einem gegenüber dem vorbekannten Stand der Technik reduzierten Rechenaufwand möglich ist.

Diese Aufgabe wird erfindungsgemäß dadurch gelöst, daß
- in einem ersten Schritt eine Spektralanalyse des Ankerstromsignals bezüglich der in dem Ankerstromsignal enthaltenen Frequenzanteile durchgeführt wird,
- anschließend die bei dem Betrieb des Gleichstrommotors auftretende aktuelle, aus der Spektralanalyse gewonnene Frequenz der im Ankerstromsignal enthaltenen Stromrippel im Hinblick auf sprunghafte Änderungen dieser Frequenz überwacht und
- bei einer Detektion einer solchen sprunghaften Änderung der aktuellen Stromrippelfrequenz eine Korrektur des Stromrippelzählergebnisses durchgeführt wird.

Bei dem erfindungsgemäßen Verfahren wird das Ankerstromsignal in einem ersten Schritt einer Spektralanalyse bezüglich der im Ankerstromsignal enthaltenen Frequenzanteile unterzogen. In der Spektralanalyse sind die Stromrippel in einer bestimmten Frequenz und auch mit einer bestimmten Amplitude enthalten. Die Frequenz der Stromrippel ist proportional zur aktuellen Drehzahl des Gleichstrommotors. Die bei einem Betrieb des Gleichstrommotors auftretende Frequenz bzw. die bei unterschiedlichen Drehzahlen auftretenden Frequenzen der in dem Ankerstromsignal enthaltenen Stromrippel sind bei den unterschiedlichen Drehzahlen bekannt und können, wenn gewünscht, über eine Berechnung aus aktuellen Motorstrom- und Motorkenndaten bei Bedarf überprüft werden. Die für einen Betrieb des Gleichstrommotors auftretende Stromrippelfrequenz kann auf unterschiedliche Weise ermittelt werden, beispielsweise auch dadurch, daß bestimmte Frequenzen in der Spektralanalyse entweder aufgrund einer zu geringen Amplitude oder aufgrund einer durch den Gleichstrommotor nicht realisierbaren Drehzahl ausgeschieden werden und somit in die weitere Betrachtung nicht eingehen. Die auf diese Weise bei einem Betrieb des Gleichstrommotors bestimmte aktuelle Frequenz der im Ankerstromsignal enthaltenen Stromrippel ist unmittelbar ein Maß für die aktuelle Drehzahl des Gleichstrommotors, über die sich sodann eine Drehwinkel- und Positionsbestimmung der Ankerwelle berechnen läßt.

Änderungen infolge des Betriebszustandes des Gleichstrommotors resultieren in einer Änderung der Frequenz der im Ankerstromsignal enthaltenen Stromrippel. Folglich sind Änderungen in der Frequenz der Stromrippel unmittelbar auf eine Drehzahländerung des Gleichstrommotors zurückzuführen.

Zum Durchführen der Spektralanalyse kann das analoge Ankerstromsignal zunächst digitalisiert und anschließend mittels einer Fast-Fourier-Transformation in seinen Frequenzsbereich transformiert werden. Diese Verfahrensschritte können wenig rechenintensiv ausgestaltet sein. Dies hat auch zur Folge, daß ohne weiteres diese Berechnungen in jedem Zeitpunkt der digitalen Abtastung des analogen Ankerstromsignals vorgenommen werden können, so daß eine Drehwinkelbestimmung der Antriebs- bzw. Ankerwelle des Gleichstrommotors in einer zeitlich sehr hohen Auflösung erfolgen kann. Folglich kann dieses Verfahren auch eingesetzt werden, um für solche Korrekturverfahren benutzt werden zu können, bei denen die aktuelle Drehzahl des Gleichstrommotors benötigt wird. Insbesondere können mit diesem Verfahren bei einer Durchführung der Verfahrensschritte im Takt der digitalen Abtastung Betriebszustandsänderungen quasi in Echtzeit erfaßt werden und somit auch in der aktuellen Drehwinkelbestimmung berücksichtigt werden.

Bei dem erfindungsgemäßen Verfahren ist nun vorgesehen, die Betriebsfrequenz der im Ankerstromsignal enthaltenen Stromrippel im Hinblick auf sprunghafte Änderungen der Stromrippelfrequenz zu überwachen. Bei Auftreten von Fehl- und/oder Doppelrippeln erfolgt eine sprunghafte Änderung der aktuellen Stromrippelfrequenz, so daß anschließend bei einer Detektion einer solchen sprunghaften Änderung der aktuellen Stromrippelfrequenz eine Korrektur des Stromrippelzählergebnisses und somit der aktuellen Positionsbestimmung durchgeführt werden kann. Die Detektion einer solchen sprunghaften Änderung der aktuellen Stromrippelfrequenz kann einer Plausibilitätskontrolle unterworfen werden, etwa über die Dauer der Frequenzänderung oder über den Frequenzsprung, um auf diese Weise eine Interpretation von nicht durch Stromrippel induzierten Frequenzen zu vermeiden. Mit einem solchen Korrekturverfahren ist es somit auf einfache Weise möglich, eine Korrektur von auftretenden Fehl- und/oder Doppelrippeln vorzunehmen, ohne daß zu diesem Zweck aufwendige und rechenintensive Algorithmen zum Erkennen von Fehl- und/oder Doppelrippeln durchgeführt werden müßten.

Im Gegensatz zum vorbekannten Stand der Technik wird bei dem beanspruchten Verfahren keine Frequenzfilterung vorgenommen, sondern es erfolgt eine direkte Ermittlung der aktuellen Stromrippelfrequenz unter Ausblendung solcher Frequenzanteile, die als Störeinflüsse ggf. das Ankerstromsignal überlagern. Die Beobachtung der Stromrippelfrequenz wird bei diesem Verfahren unmittelbar ausgewertet, ohne daß zu diesem Zweck zuvor eine eigene Stromrippeldetektion oder eine besondere Signalaufbereitung grundsätzlich notwendig wäre. Daher eignet sich dieses Verfahren insbesondere auch, um eine sensorlose Positionsbestimmung bei kommutierten Gleichstrommotoren mit geringeren Anforderungen an ihre Qualität unter Ausnutzung der im Ankerstrom enthaltenen Stromrippel durchführen zu können.

Die Erfindung ist nachfolgend nochmals anhand der Figuren erläutert. Es zeigen:
- **Fig. 1a, 1b:**: Diagramme zur Darstellung der Stromrippelfrequenz in dem Ankerstromsignal eines kommutierten Gleichstrommotors und
- **Fig. 2a, 2b:**: Diagramme zur Darstellung der Stromrippelfrequenz in dem Ankerstromsignal eines kommutierten Gleichstrommotors mit im Ankerstromsignal enthaltenen Störeinflüssen.

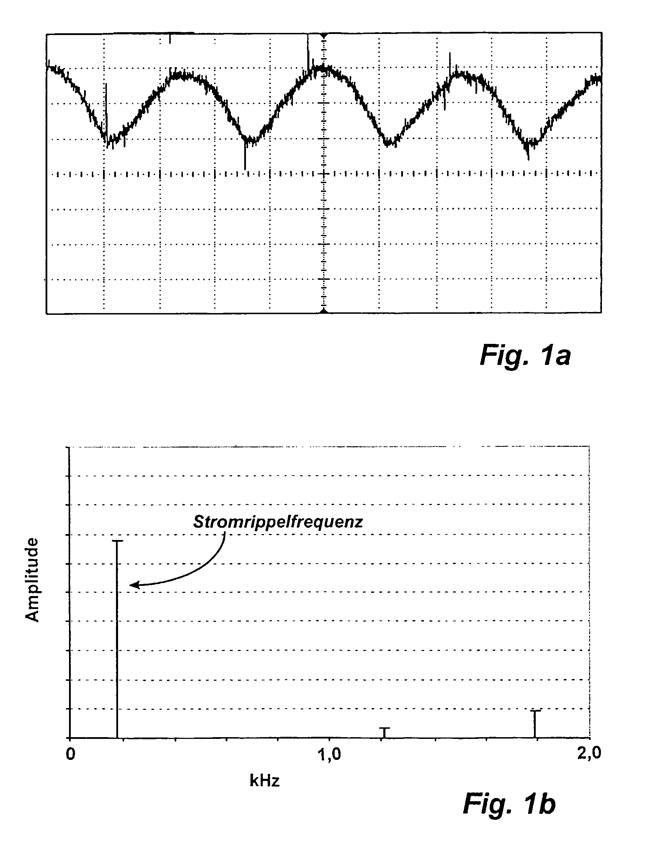

Figur 1a zeigt das analoge Ankerstromsignal eines kommutierten Gleichstrommotors bei seinem Betrieb. Deutlich erkennbar ist der wellige Verlauf des Ankerstromsignales, durch den die Stromrippel ausgebildet sind. Die Frequenz der Stromrippel im Ankerstromsignal ist proportional zur Drehzahl des Gleichstrommotors, wobei bei steigender Drehzahl sich die Frequenz der Stromrippel erhöht und umgekehrt.

Nach einer digitalen Abtastung des in Figur 1a gezeigten Ankerstromsignales wird diese einer Fast-Fourier-Transformation unterzogen, um die in dem Ankerstromsignal der Figur 1a enthaltenen Frequenzanteile darstellen zu können. Die in dem Ankerstromsignal der Figur 1a enthaltenen Frequenzanteile sind in Figur 1b dargestellt. In diesem Diagramm ist auf der y-Achse die Amplitude der Frequenzen und auf der x-Achse die Frequenz in kHz aufgetragen. In dem Ankerstromsignal der Figur 1a sind dieser Spektralanalyse zur Folge drei sich überlagernde Frequenzen beteiligt. Die beiden hohen etwa bei 1,2 kHz und 1,8 kHz befindlichen Anteile sind bereits aufgrund ihrer Amplitude nicht als Stromrippel zu bezeichnen. Vielmehr spiegelt sich in diesen beiden Frequenzen die auch in Figur 1a erkennbare Schwankung wieder. Die Frequenz der Stromrippel liegt bei etwa 0,2 kHz und ist in Figur 1b auch an der prägnanten Amplitude erkennbar. Daß es sich bei den Frequenzen bei 1,2 kHz und bei 1,8 kHz nicht um Stromrippelfrequenzen handelt, wird auch daraus deutlich, daß der Gleichstrommotor, dessen Ankerstromsignal in Figur 1a wiedergeben ist, eine derartige Drehzahl, die zu den Frequenzen bei 1,2 und 1,8 kHz führen würde, nicht realisieren könnte.

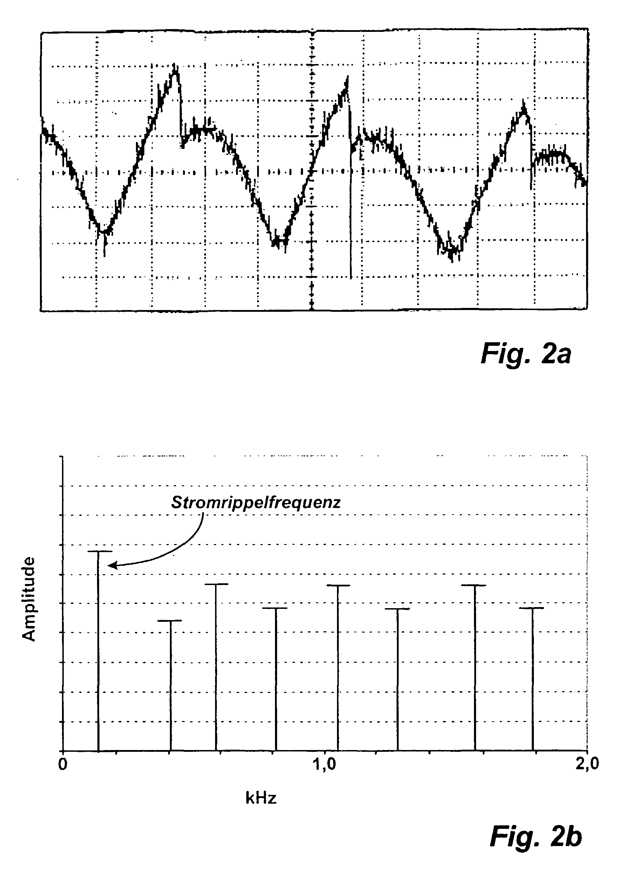

Figuren 2a und 2b zeigen eine entsprechende Darstellung, wobei jedoch in Figur 2a das Ankerstromsignal eines anderen kommutierten Gleichstrommotors wiedergegeben ist. Erkennbar ist, daß in diesem Ankerstromsignal Störeinflüsse die darin befindlichen Stromrippel überlagern. Nach einer Digitalisierung dieses Ankerstromsignals und einer Transformierung in den Frequenzbereich erhält man das in Figur 2b dargestellte Frequenzspektrum. Diese Frequenzspektrum weist eine Vielzahl von unterschiedlichen Frequenzen auf, die am Zustandekommen des in Figur 2a gezeigten Ankerstromsignals beteiligt sind. Durch eine zuvorige Definition der Stromrippelfrequenz, welches beispielsweise bei einer Eichung des Sytems durchgeführt worden ist, ist bekannt, daß bei der in Figuren 2a und 2b dargestellten Drehgeschwindigkeit die Stromrippel eine von etwa 0,15 kHz aufweisen. Bei einer Auswertung des Frequenzspektrums hinsichtlich einer sich ändernden Drehzahl zur Positionsbestimmung der Antriebswelle wird nachfolgend ausschließlich diese Frequenz beobachtet. Die anderen Frequenzen gehen in die weitere Auswertung nicht ein.

Änderungen der Stromrippelfrequenz, die betriebsbedingte Drehzahländerungen des Gleichstrommotors widerspiegeln, äußern sich in einer allmählichen Änderung der Stromrippelfrequenz. Die die Stromrippelfrequenz überlagernde Störeinflüsse bleiben von einer solchen Änderung unberücksichtigt. Solche Störeinflüsse, die durch den Kommutator bedingt sind, verändern bei einer Drehzahländerung ebenfalls ihre Frequenz, so daß diese grundsätzlich auch beobachtet werden können.

Bei Auftreten von Fehl- oder Doppelrippeln verändert sich die Frequenz der Stromrippeln sprunghaft, so daß auch dieses ohne weiteres mit dem beschriebenen Verfahren detektierbar ist. Fehl- oder Doppelrippel machen sich nur kurzzeitig bemerkbar und können beispielsweise aufgrund dieser Eigenschaft im Störfrequenzspektrum erkannt werden.

## Patentansprüche

1. Verfahren zum Korrigieren einer Drehstellungsbestimmung einer Antriebswelle eines kommutierten Gleichstrommotors durch Auswerten der im Ankerstromsignal enthaltenen Stromrippel bei Auftreten von Fehl- oder Doppelrippeln, **dadurch gekennzeichnet, daß**
- in einem ersten Schritt eine Spektralanalyse des Ankerstromsignals bezüglich der in dem Ankerstromsignal enthaltenen Frequenzanteile durchgeführt wird,
- anschließend die bei dem Betrieb des Gleichstrommotors auftretende aktuelle, aus der Spektralanalyse gewonnene Frequenz der im Ankerstromsignal enthaltenen Stromrippel im Hinblick auf sprunghafte Änderungen dieser Frequenz überwacht wird, und
- bei einer Detektion einer solchen sprunghaften Änderung der aktuellen Stromrippelfrequenz eine Korrektur des Stromrippelzählergebnisses durchgeführt wird.

2. Verfahren nach Anspruch 1, **dadurch gekennzeichnet, daß** vor dem Durchführen der Spektralanalyse das analoge Ankerstromsignal digitalisiert wird.

3. Verfahren nach Anspruch 2, **dadurch gekennzeichnet, daß** zum Durchführen der Spektralanalyse das digitalisierte Ankerstromsignal mittels einer Fast-Fourier-Transformation in seinen Frequenzbereich transformiert wird.

4. Verfahren nach einem der Ansprüche 1 bis 3, **dadurch gekennzeichnet, daß** die Verfahrenschritte in jeden Zeitpunkt der digitalen Abtastung des analogen Ankerstromsignals vorgenommen werden.

5. Verfahren nach einem der Ansprüche 1 bis 4, **dadurch gekennzeichnet, daß** die bei einem Betrieb des Gleichstrommotors auftretende Frequenz seiner Stromrippel im Hinblick auf betriebsbedingte Änderungen dieser Frequenz überwacht wird und eine weitere Auswertung durch eine Differenzbetrachtung zu einer oder mehreren zuvor ermittelten Stromrippelfrequenzen erfolgt.

## Claims

1. Procedure for correcting the determination of the rotational position of a drive shaft of a commutated direct current motor by analysing the current ripples contained in the armature current signal upon occurrence of defective or double ripples, **characterised by** the fact that
- in a first step, a spectral analysis of the armature current signal is performed in respect of the frequency components contained in the armature current signal,
- the prevailing frequency of the current ripples which occur when the direct current motor is in operation and are contained in the armature current signal and obtained from the spectral analysis, is then monitored in respect of abrupt changes to this frequency, and
- upon detecting such an abrupt change in the prevailing current ripple frequency, a correction of the outcome of the current ripple count is performed.

2. Procedure in accordance with Claim 1, **characterised by** the fact that the analogue armature current signal is digitalised prior to performing the spectral analysis.

3. Procedure in accordance with Claim 2, **characterised by** the fact that, for the purpose of performing the spectral analysis, the digitalised armature current signal is transformed in its frequency range using a fast Fourier transformation.

4. Procedure in accordance with any of Claims 1 to 3, **characterised by** the fact that the procedural steps are conducted at every point in time of the digital sampling of the analogue armature current signal.

5. Procedure in accordance with any of Claims 1 to 4, **characterised by** the fact that the frequency of its current ripple that occurs when the direct current motor is in operation is monitored in respect of operational changes in this frequency and a further analysis is performed by way of monitoring the difference in relation to one or more previously defined current ripple frequencies.

## Revendications

1. Procédé pour corriger une détermination de la position de rotation de l'arbre de commande d'un moteur à courant continu commuté par évaluation des ripples de courant contenues dans le signal de courant d'induit, lors de l'apparition de ripples intempestives ou de doubles ripples, **caractérisé en ce que**
- lors d'une première étape, une analyse spectrale du signal de courant d'induit est effectuée en ce qui concerne les composantes de fréquence contenues dans le signal de courant d'induit,
- la fréquence actuelle de la ripples de courant contenue dans le signal de courant d'induit lors du fonctionnement du moteur à courant continu, résultant de l'analyse spectrale, est ensuite contrôlée en ce qui concerne des modifications intempestives de ladite fréquence, et
- lors d'une détection d'une telle modification intempestive de la fréquence actuelle de ripples de courant, une correction du résultat du comptage de ripples de courant est exécutée.

2. Procédé selon la revendication 1, **caractérisé en ce que** le signal de courant d'induit analogique est numérisé avant l'exécution de l'analyse spectrale.

3. Procédé selon la revendication 2, **caractérisé en ce que**, pour l'exécution de l'analyse spectrale, le signal de courant d'induit numérisé est transformé au moyen d'une transformation Fast-Fourier dans sa gamme de fréquences.

4. Procédé selon l'une des revendications 1 à 3, **caractérisé en ce que** les étapes du procédé sont effectuées à chaque moment du balayage numérique du signal de courant d'induit analogique.

5. Procédé selon l'une des revendications 1 à 4, **caractérisé en ce que**, lors d'une exploitation du moteur à courant continu la fréquence de ses ripples de courant est contrôlée en ce qui concerne les modifications de cette fréquence dues au fonctionnement, et qu'une autre évaluation est effectuée par une considération de différences quant à une ou plusieurs fréquences de ripples de courant déter minées auparavant.
